# NEUE EUROPÄISCHE PATENTSCHRIFT

(11) **EP 1 601 491 B2**
(45) Veröffentlichungstag und Bekanntmachung des Hinweises auf die Entscheidung über den Einspruch: **27.03.2013**
(45) Hinweis auf die Patenterteilung: 17.12.2008
(21) Anmeldenummer: 04706177.5
(22) Anmeldetag: 29.01.2004
(51) Int. Cl.: B23K 26/12, B23K 35/38

(54) **VERFAHREN ZUM LASERSTRAHLSCHWEISSEN**
LASER BEAM WELDING METHOD
PROCEDE POUR LE SOUDAGE AU LASER

(30) Priorität: 04.02.2003 DE 10304474
(43) Veröffentlichungstag der Anmeldung: 07.12.2005
(73) Patentinhaber: Linde AG, 80331 München (DE)
(72) Erfinder: DANZER, Wolfgang, 84405 Dorfen (DE)
(74) Vertreter: Kasseckert, Rainer
(86) Internationale Anmeldenummer: PCT/EP2004/000805
(87) Internationale Veröffentlichungsnummer: WO 2004/069463

(56) Entgegenhaltungen:
- EP-A- 1 146 669
- WO-A1-02/43918
- DE-A- 19 840 926
- US-A- 3 939 323
- 'Fiber Optics Weekly Update', 24 Mai 2002

## Beschreibung

Die Erfindung betrifft ein Verfahren zum Laserstrahlschweißen mit einem Faserlaser, wobei ein von dem Faserlaser erzeugter Laserstahl auf eine Bearbeitungsstelle oder in die Nähe der Bearbeitungsstelle fokussiert wird.

Die Eigenschaften der Laserstrahlung, insbesondere die Intensität und gute Fokussierbarkeit, haben dazu geführt, dass Laser heute in vielen Gebieten der Materialbearbeitung zum Einsatz kommen. Die Laserbearbeitungsanlagen sind an sich bekannt. In der Regel weisen sie einen Laserbearbeitungskopf, gegebenenfalls mit einer zum Laserstrahl koaxial angeordneten Düse auf. Oftmals werden Laserbearbeitungsanlagen in Verbindung mit einer CNC-Steuerung eingesetzt. Auch beim Schweißen werden Laser immer umfangreicher eingesetzt, da das Laserschweißen im Vergleich zu konventionellen Schweißverfahren (MAG, WIG) eine gezieltere Wärmeeinbringung, einen geringeren Verzug und höhere Schweißgeschwindigkeit bietet. Ein Großteil der Laserschweißungen kommt ohne Zusatzmaterial aus. Dieses kann jedoch aus Gründen der Spaltüberbrückbarkeit oder der Metallurgie notwendig werden. Laserschweißen lassen sich nahezu alle Materialien, wie beispielsweise Stähle, Leichtmetalle und thermoplastische Kunststoffe.

Unter einem fokussierten Laserstrahl wird im Rahmen der Erfindung ein im wesentlichen auf die Werkstückoberfläche fokussierter Laserstrahl verstanden. Außer bei der überwiegend eingesetzten Methode mit auf die Werkstückoberfläche fokussierter Laserstrahlung kann die Erfindung auch bei der selten benutzten Variante mit nicht exakt auf die Werkstückoberfläche fokussierter Strahlung angewandt werden.

Neuste Entwicklungen in der Lasertechnik eröffneten die Möglichkeit der Verwendung von Faserlasern beim Laserschweißen. Bei den Faserlasern handelt sich um eine völlig neue Lasergeneration. Die Faserlaser unterscheiden sich in ihren Eigenschaften grundlegend von den bisher eingesetzten CO₂-Lasern, den Nd:YAG-Lasem und den Diodenlasern. Die höchste Laserleistungen werden mit CO₂-Lasern erreicht. Die Laserleistung des Faserlasers ist vergleichbar mit den Laserleistungen des CO₂-Lasers und des Nd:YAG-Lasers (der Diodenlaser zeichnet sich durch eine deutlich geringere Laserleistung aus und verhält sich deshalb beim Laserschweißen deutlich anders als die Hochleistungslaser) und liegt derzeit bei einigen hundert Watt. Die Wellenlänge des Faserlasers liegt, da als aktives Medium Seltene Erden, wie beispielsweise Ytterbium verwendet werden, im Bereich von 1060 bis 1080 nm und ist damit mit der Wellenlänge des Nd:YAG-Lasers vergleichbar. Der entscheidende Unterschied liegt jedoch in der Divergenz des Laserstrahls, des Fokusdurchmessers, der Fokuslänge und des Strahlparameterprodukts. Von diesen Größen ist das Strahlparameterprodukt diejenige, die durch den Laser festgelegt ist und die Eigenschaft des Laserstrahls entscheidend bestimmt. Das Strahlparameterprodukt ist eine konstante Größe, die von der Bauart des Lasers abhängt.Sie kann nicht durch optische Bauteile (Linsen oder Spiegel) verändert werden. Definiert ist das Strahlparameterprodukt als das Produkt aus den Strahlparametem Strahlradius in der Strahltaille und halber Divergenzwinkel (Fernfeldöffnungswinkel) und wird in der Einheit mm*mrad angegeben. Folglich ist das Strahlparameterprodukt ein Maß für die Fokussierbarkeit eines Laserstrahls. Je kleiner das Strahlparameterprodukt eines Lasers ist, desto kleiner ist die Fläche, auf die ein Laserstrahl fokussiert werden kann. Strahlparameterprodukte für Hochleistungslaser liegen typischerweise bei 3 bis 30 mm*mrad. Mit den neu entwickelten Faserlasern werden nun Strahlparameterprodukte von weniger als 1,6 mm*mrad, ja sogar von weniger als 1,4 mm*mrad erreicht. Bei einem Stahldurchmesser von 80 µm bedeute ein Strahlparameterprodukt von weniger als 1,6 mm*mrad eine Divergenz von weniger als 40 mrad. Liegt die Leistung des Faserlasers nun beispielsweise bei 700 W wird an der Bearbeitungsstelle eine Leistungsdichte von mehr als 50 MW/cm² erreicht. Der Fokus am Bearbeitungsrot liegt in diesem Beispiel bei ca. 40 µm. Die Fokuslänge des Faserlasers liegt in etwa bei 150 mm. Dies bedeutet, dass die hohe Leistungsdichte über eine Weglänge von 150 mm erhalten bleibt und folglich nicht nur auf der Oberfläche des Werkstücks erreicht sondern auch im Werkstück beziehungsweise über das Werkstück hinweg (bei Werkstücken mit Dicken kleiner gleich 1,5 cm) vorgefunden werden kann. Der Grund für die hohe Leistungsdichte am Bearbeitungsort liegt somit in der exzellenten Fokussierbarkeit des Faserlasers, welche mittels des Strahlparameterprodukts spezifiziert ist. Im Vergleich dazu liegt die Leistungsdichte am Bearbeitungsort für die bisher üblichen Hochleistungslaser im Bereich weniger MW/cm und der Fokus liegt im Bereich von mm. Die Leistungsdichte am Bearbeitungsort hat sich durch die Einführung des Faserlasers vervielfacht. Von der Firma IPG Photonics werden beispielsweise Faserlaser mit Laserleistungen von 300 bis 700 W und Strahlparameterprodukte von weniger als 1,4 bis 0,7 mm*mrad angeboten, die an der Bearbeitungsstelle einen Fokusdurchmesser von weniger als 30 bis 50 µm aufweisen und über eine Fokuslänge von 150 mm verfügen. Die Faserlaser können entweder gepulst oder kontinuierlich betrieben werden.

Die DE 198 40 296 beinhaltet ein Verfahren und eine Anordnung zur Materialbearbeitung mittels Laserstrahlung, für welches mehrere direkt modulierte diodengepumpte Fiberlaser (Faserlaser) verwendet werden, deren Ausgänge in einem Bündel angeordnet sind, wobei die Laserstrahlen so zusammengefasst sind, dass die Strahlen in einem Punkt auf die Bearbeitungsfläche treffen.

Beim Laserstrahlschweißen mit Hochleistungslasern wird von der Laserstrahlung an der Bearbeitungsstelle Material verdampft bzw. ionisiert, welches sich vom Werkstück weg in Richtung Laser bewegt. An der Bearbeitungsstelle wird im Material eine Dampfkapillare erzeugt. Über diese Dampfkapillare gelangt die Laserenergie in die Tiefe des Materials. Dadurch können wesentlich schneller schlankere Schweißnähte erzeugt werden, als dies über eine Wärmeleitung des festen Materials von der Oberfläche in die Tiefe möglich wäre. Bei der Erzeugung dieser Dampfkapillare, welche auch Keyhole genannt wird, strömt sehr heißer, verdampfter, ja bei höheren Laserenergien sogar ionisierter Werkstoff dem Laserstrahl entgegen. Das plasmaförmige Material tritt in Wechselwirkung mit dem Laserstrahl und beeinflusst diesen. Wird die optische Dichte des Metalldampfes oder Metallplasmas zu hoch, kann die Laserstrahlung nicht mehr zum Werkstück gelangen und der Schweißprozess wird ineffektiv oder bricht sogar zusammen. Die Absorption der Laserstrahlung findet dabei hauptsächlich durch thermisch ionisiertes Plasma statt. Die Plasmabildung ist deshalb bei hohen Laserenergien besonders problematisch und führt zum Zusammenbruch des Schweißprozesses. Deshalb wird bei hohen Laserenergien meist ein Prozessgas benutzt. Fehlt die nötige Energiedichte so absorbiert nur der Metalldampf. Die hierdurch verlorene Laserleistung kann zwar die Schweißgeschwindigkeit um einige 10% reduzieren, führt aber in der Regel zu keinem Abbruch des Schweißprozesses. Da die Laserleistung von Nd:YAG-Lasern i.a. geringer ist als die Laserleistung des CO₂-Lasers kann beim Schweißen mit Nd:YAG-Lasem oftmals auf ein Prozessgas verzichtet werden.

Beim Faserlaser zeigt sich nun ein anderes Verhalten bezüglich der Dampfkapillare. Aufgrund der hohe Leistungsdichte am Bearbeitungsort und dem sehr kleinen Fokusdurchmesser entsteht eine sehr feine Dampfkapillare aus verdampftem Material und Plasma. Da die Fokuslänge sehr groß ist, ist der Durchmesser der Dampfkapillare über einen weiten Bereich unverändert. Da weiterhin der Durchmesser der Dampfkapillare proportional zum Fokusdurchmesser ist, ist der Durchmesser einer von einem Faserlaser erzeugten Dampfkapillare um ein vielfaches kleiner als der Durchmesser einer mit einem herkömmlichen Hochleistungslaser erzeugten Dampfkapillare. Folglich entsteht eine sehr schmale Kapillare. Aus dieser sehr feinen und langen Kapillare kann Dampf und Plasma nun sehr schlecht entweichen. Folglich entsteht in der Kapillare ein sehr dichtes Plasma, das von der Laserstrahlung nur sehr schwer durchdrungen werden kann. Aufgrund der Enge in der doch sehr langen Kapillare unterscheidet sich das Verhalten des Plasmas und des Dampfs deutlich von dem Verhalten eines Plasmas, das bei Verwendung der bisher üblichen Hochleistungslasern entsteht. Jedoch muss bei der Verwendung eines Faserlasers, damit qualitativ hochwertige Laserschweißverbindungen entstehen, das Plasma und der Dampf beherrschbar sein.

Beim Laserschweißen mit Faserlasern treten eine Vielzahl von Probleme auf und es ist äußert schwierig qualitativ hochwertige Schweißverbindungen herzustellen. Die Schwierigkeiten unterscheiden sich deutlich von den Schwierigkeiten, die bei der Verwendung von bisher üblichen Hochleistungslaser auftreten. Zurückzuführen sind die Probleme auf die hohe Leistungsdichte an der Bearbeitungsstelle verbunden mit der großen Fokuslänge der Faserlaser.

Der vorliegenden Erfindung liegt daher die Aufgabe zugrunde, ein Verfahren anzugeben, welches ein qualitativ hochwertiges Laserstrahlschweißen mit einem Faserlaser ermöglicht.

Die Aufgabe wird durch ein Verfahren gemäß dem Anspruch 1 gelöst. Da das Prozessgas die Schweißstelle umfasst, ist diese vor der Umgebung geschützt. Ein wesentlicher Nachteil der Umgebungsluft ist neben den aggressiven Bestandteilen die in der Luft enthaltene Feuchtigkeit, da diese die Bildung von qualitätsmindemden Poren begünstigt. Wichtig ist deshalb, dass das Prozessgas entsprechend frei von Verunreinigungen ist. Deshalb enthalten Prozessgase zum Laserschweißen meist inerte Gase. Durch die Zugabe von aktiven Gasen in das Prozessgas werden die Eigenschaften der Naht und des Materials des Werkstücks in unmittelbarer Nähe der Naht beeinflusst. Durch die aktiven Gase lässt sich das Gefüge des Werkstoffs in der Umgebung der Naht gezielt beeinflussen und auch an der Oberfläche finden chemische und physikalische Reaktionen statt. In der schmalen Kapillare können sehr leicht Poren und andere Unregelmäßigkeiten entstehen, wenn sich das Prozessgas bzw. die Umgebungsluft in der schmalen Kapillare nur unzureichend verteilt. Durch die Zugabe des aktiven Gasses Wasserstoff wird eine gleichmäßige Verteilung der Prozessgase unterstützt, und folglich das Entstehen von Poren unterbunden. Des Weiteren findet bei aktiven Gasen ein Energietransport in die Dampfkapillare hinein statt. Dabei dissoziieren (falls es sich um molekulare Gase handelt) und ionisieren die Gase unter dem Einfluss der Laserstrahlung beim Eintritt in die Dampfkapillare. Bei der Rekombination der Gase, die bei nachlassender Energiedichte stattfindet, wird die lonisations- und die Dissoziationsenergie wieder frei. Da das Prozessgas in die Dampfkapillare strömt und die Laserenergie am Grund der Kapillare abnimmt, findet die Rekombination am Grund der Dampfkapillare statt. Die Rekombinationenergie wird somit an der Stelle frei, wo Material verdampft werden muss. Der Energietransport ist nun insbesondere bei den sehr schmalen Kapillaren von entscheidender Bedeutung. Durch ihn ist gewährleistet, dass am Grund der Kapillare Material verdampft wird und nicht etwa das Material über Wärmeleitung aufgeschmolzen wird. Bei einer Änderung des Entstehungsmechanismus der Schweißnaht während des Schweißvorgangs verändert sich das Verhalten des verdampften Materials und des Prozessgases, so dass in der Schweißnaht Poren entstehen. Ein auch mikroskopisch kontinuierlich verlaufender Schweißvorgang ist für qualitativ hochwertige Schweißprozesse absolut notwendig und wird mit dem erfindungsgemäßen Verfahren erreicht. Weiterhin sind hohe Schweißgeschwindigkeiten zu erreichen, da für den Schweißvorgang die im Verhältnis langsam ablaufende Wärmeleitung keine Rolle spielt.

Das verwendete aktive Gas Wasserstoff zeichnen sich dadurch aus, dass durch chemische und physikalische Reaktionen mit dem Grundwerkstoff dieser besonders vorteilhaft beeinflusst werden kann. Ferner sorgen diese molekularen Gase für einen effektiven Energietransport in die Dampfkapillare. Damit wird mit diesen Gasen die Porenbildung unterbunden und auch die Schweißgeschwindigkeit wird merklich gesteigert.

Bereits bei sehr geringen Mengen an aktivem Gas im vpm-Bereich zeigen sich bei bestimmten Materialien, wie beispielsweise Aluminium und Aluminiumlegierungen, Verbesserungen im Nahtaussehen, wobei jedoch negative Auswirkungen, die sich bei empfindlichen Materialien auftreten können, keine Rolle spielen. Bei größeren Volumenanteilen spielt auch der Energietransport eine Rolle. Die obere Grenze ergibt sich meistens aufgrund der negative Auswirkungen der aktiven Gase auf die Qualität der Schweißverbindung. Ausschlaggebend kann jedoch auch sein, dass der Heliumanteil nicht weiter erniedrigt werden kann ohne den Schweißvorgang oder die Qualität zu vermindern.

Im Prozessgas ist neben Helium Argon enthalten. Da Helium und Argon inerte Gase sind, wird die Bearbeitungsstelle von diesen gegenüber der Umgebung geschützt. Helium hat die Fähigkeit die Plasmabildung zu kontrollieren und einzuschränken und ist ein sehr kleines und leichtes Gas, welches sich sehr leicht verflüchtigt. Die Eigenschaft der Plasmakontrolle beruht auf der schweren Ionisierbarkeit des Heliums und der Erhöhung der Transparenz des Plasmas und des Dampfes für den Laserstrahl und die Energie des Laserstrahls gelangt somit bis auf den Grund der Kapillare, wo Material verdampft wird. Aufgrund der leichten Flüchtigkeit des Heliums gelangt ein heliumhaltiges Prozessgas auch wirklich tief in die sehr schmale Dampfkapillare. Dies ist von entscheidender Bedeutung, da die von dem Faserlaser erzeugte Dampfkapillare sowohl über einen sehr kleinen Durchmesser verfügt, welcher auf den kleinen Fokusdurchmesser des Faserlasers zurückzuführen ist, als auch diesen kleinen Durchmesser über die gesamte Tiefe nahezu beibehält, was auf die geringe Divergenz des Faserlaserstrahls zurückgeht. Helium mit seiner leichten Flüchtigkeit dringt nun problemlos in diese Kapillare ein und breitet sich gleichmäßig in dieser ohne ohne dazu zu neigen, sich an bestimmten Stellen oder bei direktem Materialkontakt anzusammeln. Dadurch sorgt das Helium im Prozessgas für eine gleichmäßige Verteilung der aktiven Gase in der sehr feinen Kapillare. Dies ist äußert wichtig, damit die stattfindenden Reaktionen der aktiven Gase mit der Oberfläche und dem Werkstoff an allen Stellen gleichmäßig stattfinden und keine qualitätsmildemden Unregelmäßigkeiten und Porenbildung in der Schweißnaht auftreten. Des Weitem ist die gleichmäßige Verteilung der aktiven Gase auch für den effektiven, auf der Rekombination basierenden Energietransport unabdingbar. Argon bewirkt keine Plasmakontrolle in der Dampfkapillare sondern verhält sich inert und unterbindet damit schädliche Einflüsse aus der Umgebung. Da dieses Gas jedoch deutlich preiswerter ist, ist es oft von Vorteil ein Teil des Heliums durch Argon zu ersetzen. Oft es dabei möglich, die Vorteile, die auf den Heliumanteil zurückzuführen sind, zu erhalten.

In einer vorteilhaften Ausgestaltung der Erfindung wird ein Prozessgas, welches 30 Vol.-% bis 50 Vol.-% Helium enthält, verwendet. In diesen Volumenbereichen zeigen sich die Vorteile der auf das Helium zurückzuführenden Plasmakontrolle. Der zu wählende Anteil des Heliums hängt von der zu erzielenden Qualität, der Schweißgeschwindigkeit, vom Material und von wirtschaftlichen Überlegungen ab.

Das erfindungsgemäße Verfahren zeigt seine Vorteile bei nahezu allen Werkstoffen. Es eignet sich zum Schweißen von Stählen (un-, niedrig- und hochlegiert), korrosionsbeständigen Stählen, Edelstählen, Aluminium, Aluminiumlegierungen, Kupferbasis- und Nickelbasiswerkstoffen.

## Patentansprüche

1. Verfahren zum Laserstrahlschweißen mit einem Faserlaser, wobei ein von dem Faserlaser erzeugter Laserstahl auf eine Bearbeitungsstelle oder in die Nähe der Bearbeitungsstelle fokussiert wird, wobei auf die Bearbeitungsstelle ein Prozessgas geleitet wird, welches ein aktives Gas enthält, wobei als aktives Gas Wasserstoff enthalten ist, **dadurch gekennzeichnet, dass** das Prozessgas aus 5 bis 20 Vol.% Wasserstoff, 20 Vol.-% bis 50 Vol.-% Helium und Argon besteht.

2. Verfahren nach Anspruch 1, **dadurch gekennzeichnet, dass** ein Prozessgas, welches 30 Vol.-% bis 50 Vol.-% Helium enthält, verwendet wird.

## Claims

1. A method for laser welding with a fibre laser, wherein a laser beam produced by a fibre laser is focused on a site to be processed, wherein a process gas containing an active gas is directed at the site to be processed, wherein hydrogen is contained as the active gas, **characterized in that** the process gas consists of 5 to 20 % by volume hydrogen and 20 % by volume to 50 % by volume helium and argon.

2. The method according to claim 1, **characterized in that** a process gas containing 30 % by volume to 50 % by volume helium is used.

## Revendications

1. Procédé de soudage au laser à l'aide d'un laser à fibres, un faisceau laser créé par le laser à fibres étant focalisé sur un poste d'usinage ou à proximité du poste d'usinage, un gaz de procédé qui contient un gaz actif, de l'hydrogène étant contenu en tant que gaz actif, étant focalisé sur le poste d'usinage, **caractérisé en ce que** le gaz de procédé est constitué de 5 à 20 % en volume d'hydrogène, de 20 % en volume à 50 % en volume d'hélium et d'argon.

2. Procédé selon la revendication 1, **caractérisé en ce qu'**on utilise un gaz de procédé contenant de 30 % en volume à 50 % en volume d'hélium.
